# EUROPÄISCHE PATENTSCHRIFT

(11) **EP 2 877 320 B1**
(45) Veröffentlichungstag und Bekanntmachung des Hinweises auf die Patenterteilung: **19.09.2018**
(21) Anmeldenummer: 13731301.1
(22) Anmeldetag: 11.06.2013
(51) Int. Cl.: B23Q 39/04

(54) **RUNDTAKTMASCHINE**
ROTARY INDEXING MACHINE
MACHINE CADENCÉE CIRCULAIRE

(30) Priorität: 26.07.2012 DE 102012014747
(43) Veröffentlichungstag der Anmeldung: 03.06.2015
(73) Patentinhaber: Winema Maschinenbau GmbH, 72415 Grosselfingen (DE)
(72) Erfinder: NETH, Eckhard, 72406 Bisingen (DE); STAIGER, Lothar, 72406 Bisingen (DE)
(74) Vertreter: Daub, Thomas
(86) Internationale Anmeldenummer: PCT/EP2013/062000
(87) Internationale Veröffentlichungsnummer: WO 2014/016037

(56) Entgegenhaltungen:
- WO-A1-98/36870
- DE-A1- 3 837 279
- DE-A1- 19 504 370
- DE-B1- 2 401 656
- DE-C1- 3 204 886

## Beschreibung

### Stand der Technik

Die Erfindung betrifft eine Rundtaktmaschine nach dem Oberbegriff des Anspruchs 1.

Es ist bereits eine Rundtaktmaschine mit einer Bearbeitungsvorrichtung, die zumindest zwei Bearbeitungsstationen und zumindest eine Vordrehstation aufweist, die zumindest im Wesentlichen auf einem gemeinsamen Kreisumfang in jeweils einem Kreissegment angeordnet sind, und mit zumindest einer Motoreinheit, die dazu vorgesehen ist, die Vordrehstation anzutreiben, vorgeschlagen worden.

Die DE 195 04 370 A1 beschreibt eine Rundtaktmaschine mit einer Bearbeitungsvorrichtung, die zumindest zwei Bearbeitungsstationen aufweist, die zumindest im Wesentlichen auf einem gemeinsamen Kreisumfang in jeweils einem Kreissegment angeordnet sind.

Die Aufgabe der Erfindung besteht insbesondere darin, eine gattungsgemäße Vorrichtung mit verbesserten Eigenschaften hinsichtlich einer Kompaktheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Rundtaktmaschine mit einer Bearbeitungsvorrichtung, die zumindest zwei Bearbeitungsstationen und zumindest eine Vordrehstation aufweist, die zumindest im Wesentlichen auf einem gemeinsamen Kreisumfang in jeweils einem Kreissegment angeordnet sind, und mit zumindest einer Motoreinheit, die dazu vorgesehen ist, die Vordrehstation anzutreiben.

Es wird vorgeschlagen, dass die Motoreinheit zumindest zum Großteil innerhalb des Kreissegments der Vordrehstation angeordnet ist. Unter einer "Vordrehstation" soll insbesondere eine Station verstanden werden, die in zumindest einem Betriebszustand dazu vorgesehen ist, vor einem Abtrennen eines Werkstücks von einem Halbzeug, wie beispielsweise einer Stang und/oder einem Coil, und/oder vor einem Einspannen des Werkstücks in einer Werkstückhalteeinheit und/oder vor einer Bearbeitung des Werkstücks durch zumindest eine Bearbeitungsstation an dem Werkstück zumindest eine Drehbearbeitung durchzuführen. Beispielsweise ist die Vordrehstation in dem Betriebszustand dazu vorgesehen, die Drehbearbeitung des Werkstücks bei einem rotierenden Werkstück und stillstehendem Bearbeitungswerkzeug und/oder stillstehenden Bearbeitungswerkzeugen durchzuführen. Insbesondere ist die Vordrehstation in dem Betriebszustand dazu vorgesehen, die Drehbearbeitung des Werkstücks bei einem stillstehenden Werkstück und rotierendem Bearbeitungswerkzeug und/oder rotierenden Bearbeitungswerkzeugen durchzuführen. Unter einem "gemeinsamen Kreisumfang" soll insbesondere ein Kreisumfang verstanden werden, der sowohl die Bearbeitungsstationen als auch die Vordrehstation umfasst. Unter einem "Kreissegment" soll insbesondere ein Segment verstanden werden, das durch zumindest zwei radial durch einen Mittelpunkt des gemeinsamen Kreisumfangs verlaufende Segmenttrennlinien begrenzt ist. Insbesondere sind die Kreissegmente über den Kreisumfang zumindest im Wesentlichen gleichverteilt angeordnet. Vorzugsweise ist eine Anzahl an Kreissegmenten gleich einer Summe aus Bearbeitungsstationen und Vordrehstationen. Insbesondere ist ein Winkel, unter welchem sich die das Kreissegment begrenzenden Segmenttrennlinien schneiden, gleich einem Quotienten aus 360° und der Summe aus Bearbeitungsstationen und Vordrehstationen. Unter der Wendung, dass die Kreissegmente "über den Kreisumfang zumindest im Wesentlichen gleichverteilt angeordnet" sind, soll insbesondere verstanden werden, dass eine durch zwei benachbarte, ein Kreissegment aufspannende Segmenttrennlinien sowie durch einen zwischen einem jeweiligen Schnittpunkt der das Kreissegment aufspannenden Segmenttrennlinien mit dem gemeinsamen Kreisumfang angeordneten Ausschnitt des gemeinsamen Kreisumfangs aufgespannte Kreissegmentfläche eines jeweiligen Kreissegments einen Betrag aufweist, der um weniger als 5%, vorzugsweise um weniger als 3 % und insbesondere um weniger als 1 % von einem weiteren, von der einen Kreissegmentfläche getrennt ausgebildeten Kreissegmentfläche differiert. Unter der Wendung, dass die Bearbeitungsstationen und die Vordrehstation "zumindest im Wesentlichen auf einem gemeinsamen Kreisumfang eines jeweiligen Kreissegments angeordnet" sind, soll insbesondere verstanden werden, dass ein Übergang zwischen zwei benachbarten Kreissegmenten kontinuierlich und insbesondere stetig erfolgt, wobei ein Radius des gemeinsamen Kreisumfangs in einem der beiden benachbarten Kreissegmente um weniger als 5 %, vorzugsweise um weniger als 3 % und insbesondere um weniger als 1 % von einem Radius des Kreisumfangs in einem weiteren, von dem einen Kreissegment getrennt angeordneten Kreissegment der beiden benachbarten Kreissegmente differiert. Unter der Wendung, dass die Motoreinheit "innerhalb des Kreissegments der Vordrehstation angeordnet" ist, soll insbesondere verstanden werden, dass die Motoreinheit zu einem Massenanteil und/oder zu einem Volumenanteil von 100 % innerhalb des durch zwei sich in einem Mittelpunkt des gemeinsamen Kreisumfangs schneidende, benachbarte Segmenttrennlinien aufgespannten Kreissegments der Vordrehstation angeordnet ist. Insbesondere ist die Motoreinheit derart innerhalb des Kreissegments der Vordrehstation angeordnet, dass eine der das Kreissegment der Vordrehstation aufspannenden Segmenttrennlinien auf einer Seite der Motoreinheit verläuft und eine weitere, von der einen das Kreissegment der Vordrehstation aufspannenden Segmenttrennlinie getrennt ausgebildeten Segmenttrennlinie auf einer weiteren, der einen Seite der Motoreinheit abgewandten Seite der Motoreinheit verläuft. Unter der Wendung, dass die Motoreinheit "zumindest zum Großteil innerhalb des Kreissegments der Vordrehstation angeordnet" ist, soll insbesondere verstanden werden, dass die Motoreinheit zu einem Massenanteil und/oder zu einem Volumenanteil von mehr 90 %, vorzugsweise von mehr als 93 % und insbesondere von mehr als 95 % innerhalb des Kreissegments der Vordrehstation angeordnet ist. Durch eine erfindungsgemäße Ausgestaltung kann vorteilhaft eine platzsparende Bauweise und damit eine kompakte Rundtaktmaschine erreicht werden. Zudem kann vorteilhaft eine bessere Ankopplung der Motoreinheit an die Vordrehstation erreicht werden.

In einer weiteren Ausgestaltung der Erfindung wird die Rundtaktmaschine mit einer Bearbeitungsvorrichtung, die zumindest zwei Bearbeitungsstationen und zumindest eine Vordrehstation aufweist, die zumindest im Wesentlichen auf einem gemeinsamen Kreisumfang in jeweils einem Kreissegment angeordnet sind, und mit zumindest einer Motoreinheit, die dazu vorgesehen ist, die Vordrehstation anzutreiben, vorgeschlagen, wobei die Bearbeitungsvorrichtung zumindest eine zweite Vordrehstation aufweist. Durch eine erfindungsgemäße Ausgestaltung kann vorteilhaft zeitgleich an zumindest zwei Werkstücken eine Drehbearbeitung durchgeführt werden, wodurch Produktionszeit und damit Produktionskosten eingespart werden können.

Ferner wird vorgeschlagen, dass die zumindest zwei Vordrehstationen in Umfangsrichtung unmittelbar nebeneinander angeordnet sind. Insbesondere sind die zumindest zwei Vordrehstationen in Umfangsrichtung in unmittelbar nebeneinander angeordneten Kreissegmenten angeordnet. Unter der Wendung, dass die zumindest zwei Vordrehstationen in Umfangsrichtung "unmittelbar nebeneinander angeordnet" sind, soll insbesondere verstanden werden, dass eine der Vordrehstationen in einem Kreissegment angeordnet ist und eine weitere, von der einen Vordrehstation getrennt ausgebildete Vordrehstation der zumindest zwei Vordrehstationen in einem weiteren, von dem einen Kreissegment getrennt angeordneten Kreissegment angeordnet ist, wobei das eine Kreissegment und das weitere Kreissegment durch eine beiden gemeinsame Segmenttrennlinie getrennt sind. Insbesondere sind die in Umfangsrichtung unmittelbar nebeneinander angeordneten Vordrehstationen unter Vermeidung einer weiteren in Umfangsrichtung zwischen der einen Vordrehstation und der weiteren Vordrehstation angeordneten Bearbeitungsstation und/oder Vordrehstation nebeneinander angeordnet. Durch eine erfindungsgemäße Ausgestaltung kann vorteilhaft eine gleichzeitige Beladung und Bearbeitung von zwei Werkstücken nebeneinander erfolgen, wodurch Produktionszeit und damit Produktionskosten eingespart werden können.

In einer weiteren Ausgestaltung der Erfindung wird die Rundtaktmaschine mit einer Bearbeitungsvorrichtung, die zumindest zwei Bearbeitungsstationen und zumindest eine Vordrehstation aufweist, die zumindest im Wesentlichen auf einem gemeinsamen Kreisumfang in jeweils einem Kreissegment angeordnet sind, und mit zumindest einer Motoreinheit, die dazu vorgesehen ist, die Vordrehstation anzutreiben, vorgeschlagen, wobei die Vordrehstation entlang einer Längsrichtung der Vordrehstation beweglich gelagert ist. Insbesondere ist die Vordrehstation in einer axialen Richtung der Vordrehstation beweglich gelagert. Durch eine erfindungsgemäße Ausgestaltung kann vorteilhaft eine flexible Vordrehstation erreicht werden, die je nach Situation bedarfsgerecht bewegt werden kann.

Ferner wird vorgeschlagen, dass die Motoreinheit eine Motorverzahnung aufweist, die in einem Abstand von weniger als 10 cm zu einer Verzahnung der Vordrehstation angeordnet ist. Beispielsweise ist die Motorverzahnung über einen Riemen mit der Verzahnung der Vordrehstation verbunden. Durch eine erfindungsgemäße Ausgestaltung kann vorteilhaft ein geringer Abstand zwischen der Motorverzahnung und der Verzahnung der Vordrehstation und damit eine bessere Kopplung zwischen der Motoreinheit und der Vordrehstation erreicht werden.

Zudem wird vorgeschlagen, dass die Motoreinheit mit zumindest einer Vordrehstation direktverzahnt ist. Insbesondere ist die Motoreinheit dazu vorgesehen, die Vordrehstation mittels eines Zahnradgetriebes anzutreiben. Unter der Wendung, dass die Motoreinheit mit zumindest einer Vordrehstation "direktverzahnt" ist, soll insbesondere verstanden werden, dass die Motorverzahnung der Motoreinheit und die Verzahnung der Vordrehstation in einem direkten Kontakt miteinander stehen. Insbesondere stehen die Motoreinheit und die Vordrehstation über die Motorverzahnung und die Verzahnung der Vordrehstation in einem direkten Kontakt miteinander. Beispielsweise weist die Motoreinheit einen als Stator bezeichneten ruhenden Teilbereich auf, der mittels einer Getriebewelle mit einem als Rotor bezeichneten, die Motorverzahnung aufweisenden, bewegten Teilbereich der Motoreinheit verbunden ist, wobei die Motorverzahnung in einem direkten Kontakt mit der Verzahnung der Vordrehstation steht. Durch eine erfindungsgemäße Ausgestaltung kann vorteilhaft eine bessere Kopplung der Motoreinheit und der Vordrehstation erreicht werden.

Weiterhin ist erfindungsgemäss vorgesehen, dass die Motoreinheit als ein Außenläufermotor ausgebildet ist. Unter einem "Außenläufermotor" soll insbesondere ein Motor verstanden werden, der zumindest einen als Stator bezeichneten ruhenden Teilbereich und zumindest einen als Rotor bezeichneten bewegten Teilbereich aufweist, wobei der als Stator bezeichnete ruhende Teilbereich in zumindest einem Betriebszustand des Außenläufermotors von dem als Rotor bezeichneten bewegten Teilbereich umschlossen ist. Insbesondere weist der als Rotor bezeichnete bewegte Teilbereich die Motorverzahnung auf. Vorzugsweise bewegt sich der als Rotor bezeichnete bewegte Teilbereich in dem Betriebszustand des Ausläufermotors um den als Stator bezeichneten ruhenden Teilbereich. Durch eine erfindungsgemäße Ausgestaltung kann vorteilhaft eine platzsparende Bauweise und damit eine kompakte Rundtaktmaschine erreicht werden. Zudem kann vorteilhaft eine bessere Ankopplung der Motoreinheit an die Vordrehstation erreicht werden.

Ferner wird vorgeschlagen, dass die Motoreinheit und die Vordrehstation zumindest zu einem Großteil in einem gemeinsamen Gehäuse angeordnet sind. Unter der Wendung, dass die Motoreinheit und die Vordrehstation "zumindest zu einem Großteil in einem gemeinsamen Gehäuse angeordnet" sind, soll insbesondere verstanden werden, dass die Motoreinheit und die Vordrehstation zu einem jeweiligen Massenanteil und/oder zu einem jeweiligen Volumenanteil von mehr als 45 %, vorzugsweise von mehr als 47% und insbesondere von mehr als 49 % in einem gemeinsamen Gehäuse angeordnet sind. Insbesondere ist zumindest die Vordrehstation oder die Motoreinheit zu einem Massenanteil und/oder zu einem Volumenanteil von 100 % in dem gemeinsamen Gehäuse angeordnet. Vorzugsweise sind die Motoreinheit und die Vordrehstation in zumindest einem Betriebszustand der Rundtaktmaschine zu einem jeweiligen Massenanteil und/oder zu einem jeweiligen Volumenanteil von 100 % in dem Gehäuse angeordnet. Durch eine erfindungsgemäße Ausgestaltung kann vorteilhaft eine platzsparende Bauweise und damit eine kompakte Rundtaktmaschine erreicht werden. Zudem sind die Motoreinheit und die Vordrehstation sicher und vor einer Beschädigung durch äußere Fremdeinwirkung geschützt angeordnet.

Weiterhin wird vorgeschlagen, dass das Gehäuse mehrteilig ausgebildet ist. Unter der Wendung, dass das Gehäuse "mehrteilig" ausgebildet ist, soll insbesondere verstanden werden, dass das Gehäuse zumindest zwei Gehäuseteilbereiche aufweist, die in zumindest einem Zustand vor einer Montage des Gehäuses räumlich getrennt angeordnet sind und die in zumindest einem montierten Zustand des Gehäuses miteinander verbunden sind. Insbesondere sind die zumindest zwei Gehäuseteilbereiche in dem montierten Zustand des Gehäuses lösbar miteinander verbunden. Beispielsweise sind die zumindest zwei Gehäuseteilbereiche in dem montierten Zustand des Gehäuses durch eine Rastverbindung und/oder durch eine Schraubenverbindung lösbar miteinander verbunden. Durch eine erfindungsgemäße Ausgestaltung kann vorteilhaft eine Montage der Rundtaktmaschine erleichtert und damit Produktionskosten gespart werden.

Ferner wird vorgeschlagen, dass die Motoreinheit zumindest im Wesentlichen in einem von einer Längserstreckung der Vordrehstation aufgespannten Bereich angeordnet ist. Unter der Wendung, dass die Motoreinheit "in einem von einer Längserstreckung der Vordrehstation aufgespannten Bereich angeordnet" ist, soll insbesondere verstanden werden, dass bei einer Projektion in einer senkrecht zu der Längserstreckung der Vordrehstation ausgerichteten Projektionsrichtung der Motoreinheit und der Vordrehstation in eine beiden gemeinsame Ebene die Motoreinheit in der Ebene eine Erstreckung parallel zu der Längserstreckung der Vordrehstation aufweist, wobei die Längserstreckung der Motoreinheit in der Ebene zwischen zwei an entgegengesetzten, durch die Längserstreckung der Vordrehstation getrennten Enden der Vordrehstation angeordnet ist. Unter der Wendung, dass die Motoreinheit "zumindest im Wesentlichen in einem von einer Längserstreckung der Vordrehstation aufgespannten Bereich angeordnet" ist, soll insbesondere verstanden werden, dass die Längserstreckung der Motoreinheit in der Ebene zu mehr als 90 %, vorzugsweise zu mehr als 95 % und insbesondere zu mehr als 97 % zwischen den zwei an entgegengesetzten, durch die Längserstreckung der Vordrehstation getrennten Enden der Vordrehstation angeordnet ist. Durch eine erfindungsgemäße Ausgestaltung kann vorteilhaft eine platzsparende Bauweise und damit eine kompakte Rundtaktmaschine erreicht werden. Zudem kann vorteilhaft eine bessere Ankopplung der Motoreinheit an die Vordrehstation erreicht werden.

Zudem wird vorgeschlagen, dass ein Abstand der Motoreinheit von einem als Werkstückeingang ausgebildeten Ende der Vordrehstation zumindest größer als 10% der Längserstreckung der Vordrehstation ist. Insbesondere ist der Abstand der Motoreinheit von dem als Werkstückeingang ausgebildeten Ende der Vordrehstation größer als ein Abstand der Motoreinheit von dem als Werkstückausgang ausgebildeten Ende der Vordrehstation. Vorzugsweise ist die Motoreinheit bezüglich einer von dem als Werkstückeingang ausgebildeten Ende der Vordrehstation ausgehenden Längsrichtung der Vordrehstation in einem vorderen Bereich der Vordrehstation angeordnet. Durch eine erfindungsgemäße Ausgestaltung kann vorteilhaft eine platzsparende Bauweise und damit eine kompakte Rundtaktmaschine erreicht werden. Zudem kann vorteilhaft eine bessere Ankopplung der Motoreinheit an die Vordrehstation erreicht werden.

Weiterhin wird vorgeschlagen, dass die Bearbeitungsvorrichtung zumindest fünf Bearbeitungsstationen aufweist. Insbesondere weist die Bearbeitungsvorrichtung zumindest acht Bearbeitungsstationen auf. Durch eine erfindungsgemäße Ausgestaltung kann vorteilhaft ein Werkstück bedarfsgerecht und vielseitig bearbeitet werden.

Ferner wird vorgeschlagen, dass der gemeinsame Kreisumfang einen Radius von weniger als 220 mm aufweist. Durch eine erfindungsgemäße Ausgestaltung kann vorteilhaft eine platzsparende Bauweise und damit eine kompakte Rundtaktmaschine erreicht werden. Zudem kann vorteilhaft eine bessere Ankopplung der Motoreinheit an die Vordrehstation erreicht werden.

In einer weiteren Ausgestaltung der Erfindung wird ein Verfahren mit einer erfindungsgemäßen Rundtaktmaschine vorgeschlagen, wobei bei zumindest einem Taktvorgang zumindest ein Werkstück in Umfangsrichtung um wenigstens zwei Kreissegmente verschoben wird. Durch eine erfindungsgemäße Ausgestaltung kann vorteilhaft eine Zwillings und/oder Doppelanfertigung erreicht werden, wodurch eine schnelle Bearbeitung des zumindest einen Werkstücks erreicht werden kann. Zudem kann vorteilhaft eine platzsparende Bauweise und damit eine kompakte Rundtaktmaschine erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Rundtaktmaschine in einer Seitenansicht in einer schematischen Darstellung,
- Fig. 2: einen Ausschnitt einer Ansicht auf die erfindungsgemäße Rundtaktmaschine aus Fig. 1 mit Blickrichtung gemäß II in einer schematischen Darstellung,
- Fig. 3: eine erfindungsgemäße Vordrehstation mit einer erfindungsgemäßen Motoreinheit in einer teilweisen Schnittdarstellung und
- Fig. 4: einen Schnitt durch die Achse IV-IV aus Fig. 3.

### Beschreibung des Ausführungsbeispiels

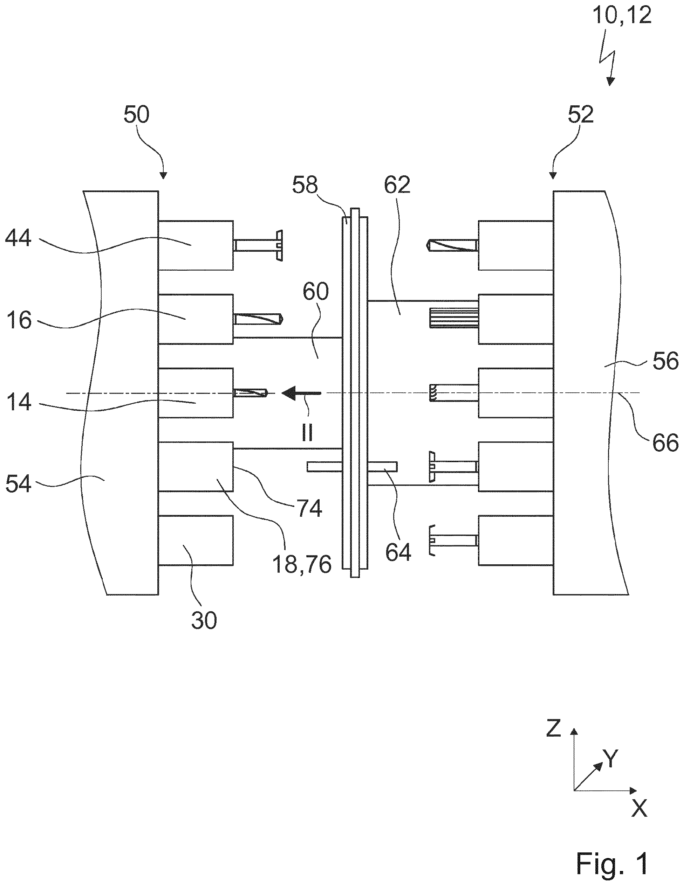

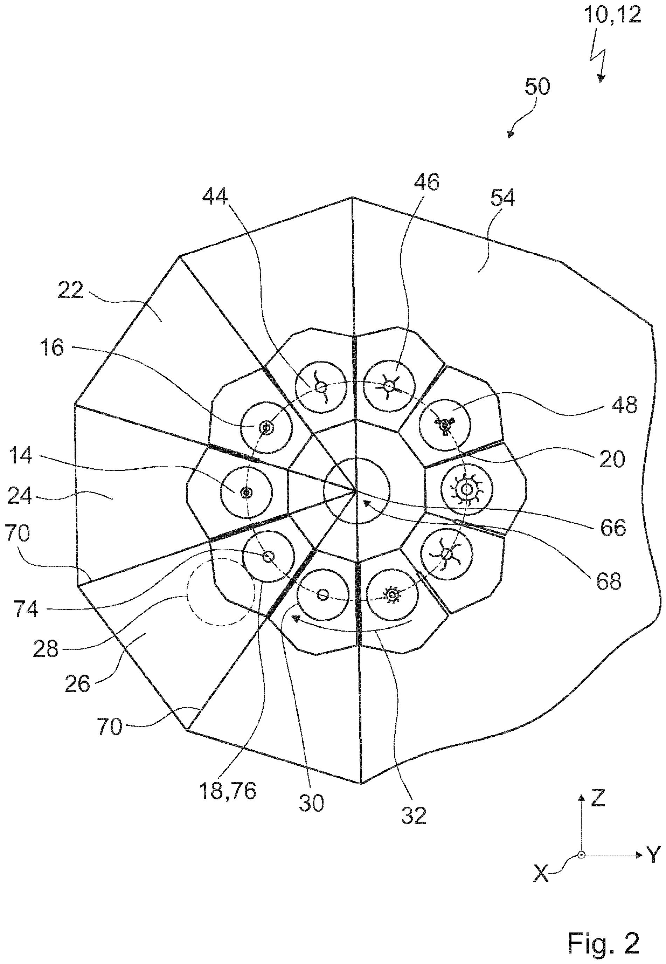

Fig. 1 zeigt eine erfindungsgemäße Rundtaktmaschine 10 in einer Seitenansicht in einer schematischen Darstellung. Erfindungsgemäß ist vorgesehen, dass die Rundtaktmaschine 10 mit einer Bearbeitungsvorrichtung 12, die zumindest zwei Bearbeitungsstationen 14, 16 und zumindest eine Vordrehstation 18 aufweist, die zumindest im Wesentlichen auf einem gemeinsamen Kreisumfang 20 in jeweils einem Kreissegment 22, 24, 26 angeordnet sind, und mit einer Motoreinheit 28, die dazu vorgesehen ist, die Vordrehstation 18 anzutreiben, ausgestattet ist. In dem gezeigten Ausführungsbeispiel weist die Bearbeitungsvorrichtung 12 eine zweite Vordrehstation 30 auf. Die Bearbeitungsvorrichtung 12 umfasst zwei Bearbeitungsvorrichtungsteile 50, 52, welche einander bezüglich einer Raumrichtung x gegenüberliegen. Die Bearbeitungsvorrichtungsteile 50, 52 weisen jeweils ein als Vieleck ausgebildetes Stationshalterungselement 54, 56 auf (vgl. auch Fig. 2). Grundsätzlich ist jedoch auch denkbar, dass die Stationshalterungselemente 54, 56 eine andere Form, wie beispielsweise eine runde Form, aufweisen.

In dem Bearbeitungsvorrichtungsteil 50 weist die Bearbeitungsvorrichtung 12 acht Bearbeitungsstationen 14, 16, 44, 46, 48 auf. Von den acht Bearbeitungsstationen 14, 16, 44, 46, 48 sind in Fig. 1 lediglich drei Bearbeitungsstationen 14, 16, 44 dargestellt, da die weiteren Bearbeitungsstationen 46, 48 von den dargestellten Bearbeitungsstationen 14, 16, 44 sowie von den dargestellten Vordrehstationen 18, 30 verdeckt sind. Zudem sind der Übersichtlichkeit halber insgesamt lediglich fünf der Bearbeitungsstationen 14, 16, 44, 46, 48 mit Bezugszeichen versehen. Ferner weist die Bearbeitungsvorrichtung 12 in dem Bearbeitungsvorrichtungsteil 50 die zwei Vordrehstationen 18, 30 auf, wobei die zwei Vordrehstationen 18, 30 in Umfangsrichtung 32 unmittelbar nebeneinander angeordnet sind. In dem Bearbeitungsvorrichtungsteil 52 weist die Bearbeitungsvorrichtung 12 zehn Bearbeitungsstationen auf, welche der Übersichtlichkeit halber keine Bezugszeichen erhalten. Somit weist die Bearbeitungsvorrichtung 12 insgesamt achtzehn Bearbeitungsstationen 14, 16, 44, 46, 48 auf. Grundsätzlich ist jede einem Fachmann als sinnvoll erscheinende Kombination und Anordnung von Vordrehstationen und Bearbeitungsstationen denkbar, so dass insgesamt zwanzig Stationen erreicht werden. In Fig. 1 und 2 sind bezüglich der Raumrichtung x lediglich einer Werkstückhalteeinheit 58 zuweisende Bearbeitungsbereiche der Bearbeitungsstationen 14, 16, 44, 46, 48 sowie der Vordrehstationen 18, 30 dargestellt. Restliche, von den Bearbeitungsbereichen getrennt angeordnete Bereiche der Bearbeitungsstationen 14, 16, 44, 46, 48 sowie der Vordrehstationen 18, 30 sind von den Stationshalterungselementen 54, 56 verdeckt, so dass diese nicht dargestellt sind.

Bezüglich der Raumrichtung x ist etwa mittig zwischen den zwei Bearbeitungsvorrichtungsteilen 50, 52 die Werkstückhalteeinheit 58 angeordnet. Die Werkstückhalteeinheit 58 ist jeweils durch eine Werkstückhalteeinheitenanbringung 60, 62 etwa mittig zwischen den zwei Bearbeitungsvorrichtungsteilen 50, 52 angebracht. Die jeweilige Werkstückhalteeinheitenanbringung 60, 62 greift jeweils in eine Ausnehmung 68 des jeweiligen Stationshalterungselements 54, 56 ein (vgl. Fig. 2). Die Werkstückhalteeinheit 58 weist mehrere Öffnungen (nicht dargestellt) auf, die jeweils dazu vorgesehen sind, jeweils ein Werkstück 64 aufzunehmen. Die in den Öffnungen angeordneten Werkstücke 64 sind in den Öffnungen durch Zangen (nicht dargestellt) geklemmt, so dass die Werkstücke 64 stabil in den Öffnungen angeordnet sind. In Fig. 1 ist beispielhaft lediglich das Werkstück 64 dargestellt, wobei die Werkstückhalteeinheit 58 in dem gezeigten Ausführungsbeispiel insgesamt zehn Werkstücke 64 zeitgleich aufnehmen kann. Somit können in der erfindungsgemäßen Rundtaktmaschine 10 zeitgleich zehn Werkstücke 64 von zwei einander gegenüberliegenden Seiten des jeweiligen zu bearbeitenden Werkstücks 64 bearbeitet werden. Die Werkstückhalteeinheit 58 ist derart angeordnet, dass die Öffnungen der Werkstückhalteeinheit 58 in zumindest einem Betriebszustand der Rundtaktmaschine 10 etwa auf einer Höhe von beispielhaft dargestellten Werkzeugen der Bearbeitungsstationen 14, 16, 44, 46, 48 zu liegen kommen, so dass ein an der Werkstückhalteeinheit 58 angeordnetes Werkstück 64 vorteilhaft bearbeitet werden kann. Die Öffnungen sind auf Höhe des gemeinsamen Kreisumfangs 20 der Bearbeitungsstationen 14, 16, 44, 46, 48 sowie der Vordrehstationen 18, 30 angeordnet. In dem gezeigten Ausführungsbeispiel weist der gemeinsame Kreisumfang 20 einen Radius von weniger als 220 mm auf. Der Radius des gemeinsamen Kreisumfangs 20 beträgt in dem gezeigten Ausführungsbeispiel 185 mm.

Bei einer Anwendung eines erfindungsgemäßen Verfahrens mit der erfindungsgemäßen Rundtaktmaschine 10 ist es möglich, dass bei einem Taktvorgang die Werkstücke 64 in Umfangsrichtung 32 um zwei Kreissegmente 22, 24 verschoben werden. Alternativ ist denkbar, dass die Werkstücke 64 bei dem Taktvorgang in Umfangsrichtung 32 um drei Kreissegmente 22, 24, 26 verschoben werden. Eine Anzahl an Kreissegmenten 22, 24, 26, um welche die Werkstücke 64 bei dem Taktvorgang in Umfangsrichtung 32 verschoben werden, ist einstellbar. Bei dem erfindungsgemäßen Verfahren wird die Werkstückhalteeinheit 58 samt den in der Werkstückhalteeinheit 58 befindlichen Werkstücken 64 um eine Drehachse 66 gedreht. Die Drehachse 66 verläuft etwa mittig durch die Werkstückhalteeinheit 58 sowie durch die zwei Bearbeitungsvorrichtungsteile 50, 52.

Fig. 2 zeigt einen Ausschnitt einer Ansicht auf die erfindungsgemäße Rundtaktmaschine 10 aus Fig. 1 mit Blickrichtung gemäß Pfeil II in einer schematischen Darstellung. Fig. 2 verdeutlicht, dass die beiden Vordrehstationen 18, 30 in Umfangsrichtung 32 unmittelbar nebeneinander angeordnet sind. Wie eingangs bereits erwähnt, sind in Fig. 1 und 2 bezüglich der Raumrichtung x lediglich der Werkstückhalteeinheit 58 zuweisende Bearbeitungsbereiche der Bearbeitungsstationen 14, 16, 44, 46, 48 sowie der Vordrehstationen 18, 30 dargestellt. Restliche Bereiche der Bearbeitungsstationen 14, 16, 44, 46, 48 sowie der Vordrehstationen 18, 30 sind durch die jeweiligen Stationshalterungselemente 54, 56 verdeckt. Zur Veranschaulichung ist in Fig. 2 dennoch die Motoreinheit 28 der Vordrehstation 18 in gestrichelten Linien dargestellt. Eine Anordnung einer identisch zu der Motoreinheit 28 Vordrehstation 18 ausgebildeten Motoreinheit der Vordrehstation 30 ist analog zu der Anordnung der Motoreinheit 28 der Vordrehstation 18. Im Folgenden wird daher nur die Motoreinheit 28 der Vordrehstation 18 beschrieben.

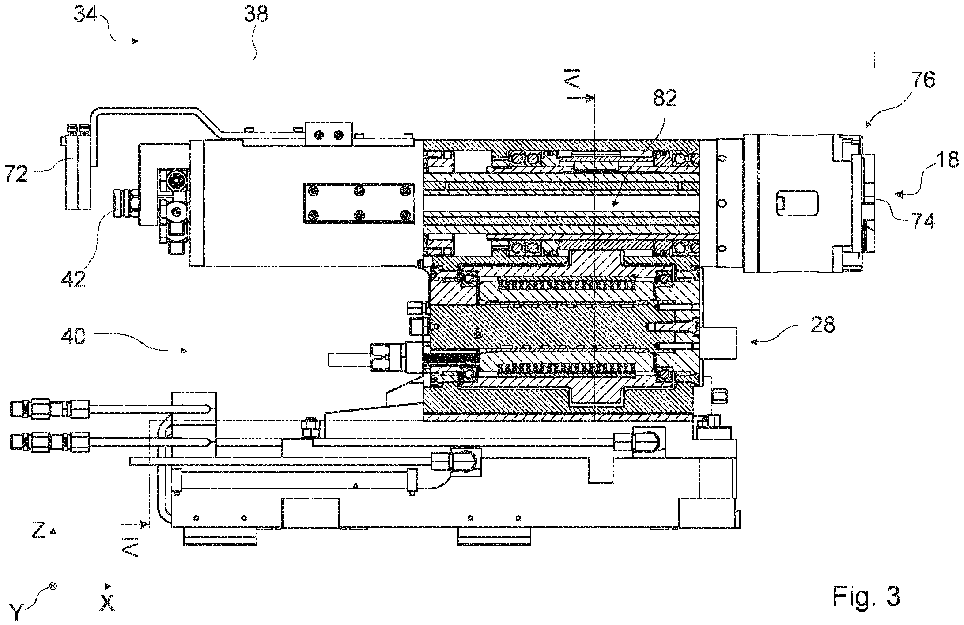

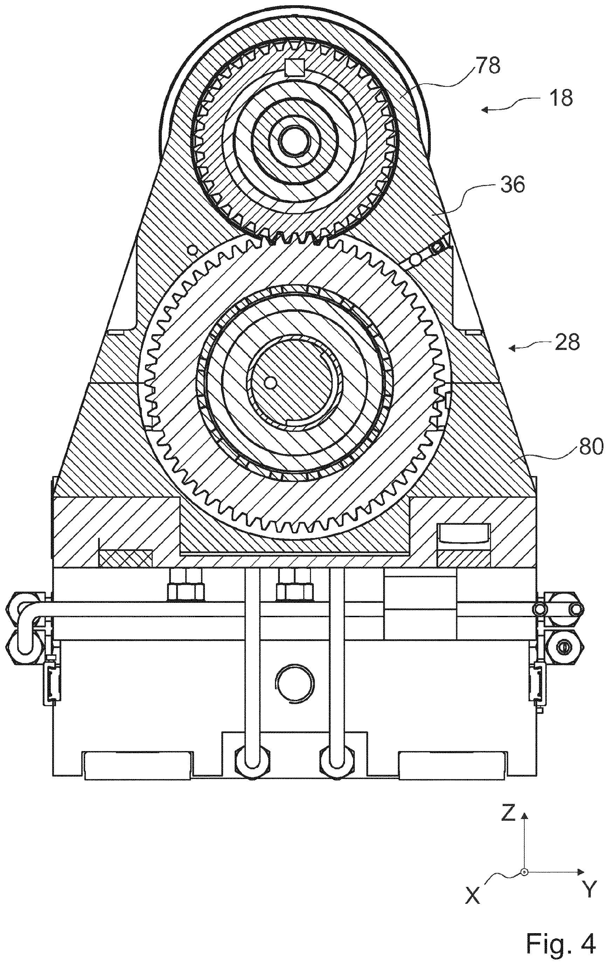

Fig. 2 kann entnommen werden, dass die Motoreinheit 28 innerhalb des Kreissegments 26 der Vordrehstation 18 angeordnet ist. Die Kreissegmente 22, 24, 26 sind jeweils durch Segmenttrennlinien 70 ausgebildet. Von den Segmenttrennlinien 70 sind der Übersichtlichkeit halber lediglich die das Kreissegment 26 der Vordrehstation 18 aufspannenden Segmenttrennlinien 70 mit Bezugszeichen versehen. Die Motoreinheit 28 ist dazu vorgesehen, die Vordrehstation 18 mittels eines Zahnradgetriebes anzutreiben. Im gezeigten Ausführungsbeispiel ist die Motoreinheit 28 als ein Außenläufermotor ausgebildet. Anhand von Fig. 3 und 4 soll die Motoreinheit 28 sowie die Vordrehstation 18 genauer beschrieben werden. Die nachfolgende Beschreibung beschränkt sich im Wesentlichen auf für eine Ausführung der Erfindung wesentliche Merkmale, wobei auf eine Beschreibung von nicht für die Erfindung wesentlichen Merkmalen der Übersichtlichkeit der Darstellung halber verzichtet wird.

Fig. 3 zeigt die erfindungsgemäße Vordrehstation 18 mit der erfindungsgemäßen Motoreinheit 28 in einer teilweisen Schnittdarstellung. Dabei ist die Vordrehstation 18 lediglich in einem Bereich, in welchem die Motoreinheit 28 angeordnet ist, in der Schnittdarstellung dargestellt. Die Motoreinheit 28 ist dagegen gänzlich in der Schnittdarstellung gezeigt. Die Vordrehstation 18 weist einen Werkstückeingang 42 auf, über welchem der Vordrehstation 18 in dem Betriebszustand der Rundtaktmaschine 10 Werkstücke 64 zu einer Durchführung einer Drehbearbeitung zugeführt werden können. Weiterhin weist die Vordrehstation 18 einen Werkstückschieber 72 auf, mittels dessen die Vordrehstation 18 das der Vordrehstation 18 zugeführte Werkstück 64 in einer Längsrichtung 34 bewegen kann. Der Werkstückschieber 72 ist in einem Bereich des Werkstückeingangs 42 an der Vordrehstation 18 angeordnet. Durch den Werkstückschieber 72 kann demnach das der Vordrehstation 18 zugeführte Werkstück 64 in der Längsrichtung 34 durch die Vordrehstation 18 an einen Werkstückausgang 74 bewegt werden.

Der Werkstückausgang 74 ist an einem dem Werkstückeingang 42 entgegengesetzt angeordneten Ende der Vordrehstation 18 angeordnet. Zwischen dem Werkstückeingang 42 und dem Werkstückausgang 74 ist ein Werkstückdurchführungskanal 82 angeordnet, von welchem in Fig. 3 lediglich ein Ausschnitt sichtbar ist. Durch den Werkstückdurchführungskanal 82 kann mittels des Werkstückschiebers 72 das Werkstück 64 durch die Vordrehstation 18 bewegt werden. Der Werkstückausgang 74 ist in dem Bearbeitungsbereich 76 der Vordrehstation 18 angeordnet. In dem Bearbeitungsbereich 76 der Vordrehstation 18 sind sowohl eine Spannzange zu einer lösbaren Fixierung des der Vordrehstation 18 zugeführten Werkstücks 64 als auch Drehbearbeitungswerkzeuge zu einer Durchführung der Drehbearbeitung angeordnet (nicht dargestellt). Eine Funktionsweise der Drehbearbeitung in dem Bearbeitungsbereich 76 der Vordrehstation 18 erfolgt in bekannter Weise, weshalb im Folgenden auf eine genauere Darstellung verzichtet wird. Lediglich auf Unterschiede zu der bekannten Funktionsweise der Drehbearbeitung soll kurz hingewiesen werden. In der erfindungsgemäßen Vordrehstation 18 erfolgt die Drehbearbeitung derart, dass die in dem Bearbeitungsbereich 76 der Vordrehstation 18 angeordneten Bearbeitungswerkzeuge um das durch die Spannzange lösbar fixierte, der Vordrehstation 18 zugeführte Werkstück 64 rotieren. Um das Werkstück 64 über eine gesamte Längserstreckung des Werkstücks 64 bearbeiten zu können, ist der Werkstückschieber 72 vorgesehen, der das Werkstück 64 in Richtung des Werkstückausgangs 74 der Vordrehstation 18 bewegt, sobald ein in dem Bearbeitungsbereich 76 der Vordrehstation 18 befindlicher Bereich der Längserstreckung des Werkstücks 64 fertig bearbeitet ist. Nach erfolgter Bewegung durch den Werkstückschieber 72 befindet sich das Werkstück 64 in einem weiteren, von dem einen Bereich getrennt angeordneten Bereich der Längserstreckung des Werkstücks 64 in dem Bearbeitungsbereich 76 der Vordrehstation 18. Somit kann das Werkstück 64 durch die erfindungsgemäße Vordrehstation 18 entlang der gesamten Längserstreckung des Werkstücks 64 bearbeitet werden. Vorteilhaft kann ein unbearbeiteter Bereich aufgrund eines Einspannens des Werkstücks 64 in dem unbearbeiteten Bereich vermieden werden.

Die Motoreinheit 28 ist in einem von einer Längserstreckung 38 der Vordrehstation 18 aufgespannten Bereich 40 angeordnet. In der in Fig. 3 dargestellten Position der Motoreinheit 28 relativ zu der Vordrehstation 18 ist ein Abstand der Motoreinheit 28 von einem als Werkstückeingang 42 ausgebildeten Ende der Vordrehstation 18 größer als 10% der Längserstreckung 38 der Vordrehstation 18. Die Motoreinheit 28 ist bezüglich der Längsrichtung 34 in einem vorderen Bereich der Vordrehstation 18 angeordnet. Lediglich der Bearbeitungsbereich 76 der Vordrehstation 18 ist in der in Fig. 3 dargestellten Position der Motoreinheit 28 relativ zu der Vordrehstation 18 bezüglich der Längsrichtung 34 vor der Motoreinheit 28 angeordnet. Die Vordrehstation 18 ist entlang der Längsrichtung 34 der Vordrehstation 18 beweglich gelagert, weshalb eine Position der Motoreinheit 28 relativ zu der Vordrehstation 18 bezüglich der Längsrichtung 34 variierbar ist. Demnach ist die Vordrehstation 18 in einer parallel zu der Längserstreckung 38 der Vordrehstation 18 ausgerichteten axialen Richtung beweglich gelagert.

Wie bereits in Fig. 2 dargestellt, ist die Motoreinheit 28 dicht an der Vordrehstation 18 angeordnet. Erfindungsgemäß ist vorgesehen, dass die Motoreinheit 28 eine Motorverzahnung aufweist, die in einem Abstand von weniger als 10 cm zu einer Verzahnung der Vordrehstation 18 angeordnet ist. Somit ist erfindungsgemäß denkbar, dass die Motorverzahnung über einen Riemen mit der Verzahnung der Vordrehstation 18 verbunden ist. Anhand einer kombinierten Betrachtung von Fig. 3 und 4 ist ersichtlich, dass die Motoreinheit 28 mit der Vordrehstation 18 direktverzahnt ist. Demnach sind die Motoreinheit 28 und die Vordrehstation 18 in einem direkten Kontakt angeordnet. Der direkte Kontakt zwischen der Motoreinheit 28 und der Vordrehstation 18 ist über die Motorverzahnung der Motoreinheit 28 und der Verzahnung der Vordrehstation 18 hergestellt. Durch die erfindungsgemäße Anordnung der Motoreinheit 28 und der Vordrehstation 18 eröffnet sich die Möglichkeit, dass die Motoreinheit 28 und die Vordrehstation 18 zumindest zu einem Großteil in einem gemeinsamen Gehäuse 36 angeordnet sind (vgl. Fig. 4).

Fig. 4 zeigt einen Schnitt durch die Achse IV-IV aus Fig. 3. Anhand der Fig. 4 kann erkannt werden, dass die Vordrehstation 18 gänzlich in dem gemeinsamen Gehäuse 36 angeordnet ist.

Das Gehäuse 36 ist mehrteilig ausgebildet. Das Gehäuse 36 umfasst zwei Gehäuseteilbereiche 78, 80, welche in dem Betriebszustand der Rundtaktmaschine 10 lösbar miteinander verbunden sind. Die Vordrehstation 18 ist gänzlich in dem Gehäuseteilbereich 78 angeordnet. Zudem ist die Motoreinheit 28 zu einem Anteil von etwa 50% in dem Gehäuseteilbereich 78 angeordnet. Ein restlicher, von dem einen Anteil getrennt ausgebildeter Anteil der Motoreinheit 28 ist in dem Gehäuseteilbereich 80 angeordnet. Wie bereits erwähnt, ist die Motoreinheit 28 als ein Außenläufermotor ausgebildet, was in Fig. 4 erkennbar ist. Ein als Stator bezeichneter ruhender Teilbereich der Motoreinheit 28 ist von einem als Rotor bezeichneten Teilbereich der Motoreinheit 28 umschlossen. Der als Rotor bezeichnete bewegte Teilbereich der Motoreinheit 28 weist die Motorverzahnung auf und steht in dem direkten Kontakt mit der Verzahnung der Vordrehstation 18. In dem Betriebszustand der Rundtaktmaschine 10 bewegt sich der als Rotor bezeichnete bewegte Teilbereich der Motoreinheit 28 um den als Stator bezeichneten ruhenden Teilbereich der Motoreinheit 28. Durch diese Bewegung des als Rotor bezeichneten bewegten Teilbereichs der Motoreinheit 28 wird die Vordrehstation 18 durch die Motoreinheit 28 angetrieben.

**Bezugszeichen**

| | | | |
|---|---|---|---|
| 10 | Rundtaktmaschine | 56 | Stationshalterungselement |
| 12 | Bearbeitungsvorrichtung | 58 | Werkstückhalteeinheit |
| 14 | Bearbeitungsstation | 60 | Werkstückhalteeinheitenanbringung |
| 16 | Bearbeitungsstation | 62 | Werkstückhalteeinheitenanbringung |
| 18 | Vordrehstation | 64 | Werkstück |
| 20 | Kreisumfang | 66 | Drehachse |
| 22 | Kreissegment | 68 | Ausnehmung |
| 24 | Kreissegment | 70 | Segmenttrennlinie |
| 26 | Kreissegment | 72 | Werkstückschieber |
| 28 | Motoreinheit | 74 | Werkstückausgang |
| 30 | Vordrehstation | 76 | Bearbeitungsbereich |
| 32 | Umfangsrichtung | 78 | Gehäuseteilbereich |
| 34 | Längsrichtung | 80 | Gehäuseteilbereich |
| 36 | Gehäuse | 82 | Werkstückdurchführungskanal |
| 38 | Längserstreckung | | |
| 40 | Bereich | | |
| 42 | Werkstückeingang | | |
| 44 | Bearbeitungsstation | | |
| 46 | Bearbeitungsstation | | |
| 48 | Bearbeitungsstation | | |
| 50 | Bearbeitungsvorrichtungsteil | | |
| 52 | Bearbeitungsvorrichtungsteil | | |
| 54 | Stationshalterungselement | | |

## Patentansprüche

1. Rundtaktmaschine mit einer Bearbeitungsvorrichtung (12), die zumindest zwei Bearbeitungsstationen (14, 16) und zumindest eine Vordrehstation (18), die dazu vorgesehen ist, vor einem Abtrennen eines Werkstücks von einem Halbzeug und vor einem Einspannen des Werkstücks in einer Werkstückhalteeinheit an dem Werkstück zumindest eine Drehbearbeitung durchzuführen, aufweist, die zumindest im Wesentlichen auf einem gemeinsamen Kreisumfang (20) in jeweils einem Kreissegment (22, 24, 26) angeordnet sind, und mit einer Motoreinheit (28), die dazu vorgesehen ist, die Vordrehstation (18) anzutreiben, **dadurch gekennzeichnet, dass** die Motoreinheit (28) zumindest zum Großteil innerhalb des Kreissegments (26) der Vordrehstation (18) angeordnet ist, wobei die Motoreinheit (28) als ein Außenläufermotor ausgebildet ist.

2. Rundtaktmaschine nach Anspruch 1,
**dadurch gekennzeichnet, dass**
die Bearbeitungsvorrichtung (12) zumindest eine zweite Vordrehstation (30) aufweist.

3. Rundtaktmaschine nach Anspruch 2,
**dadurch gekennzeichnet, dass**
die zumindest zwei Vordrehstationen (18, 30) in Umfangsrichtung (32) unmittelbar nebeneinander angeordnet sind.

4. Rundtaktmaschine nach einem der vorhergehenden Ansprüche,
**dadurch gekennzeichnet, dass**
die Vordrehstation (18) entlang einer Längsrichtung (34) der Vordrehstation (18) beweglich gelagert ist.

5. Rundtaktmaschine nach einem der vorhergehenden Ansprüche,
**dadurch gekennzeichnet, dass**
die Motoreinheit (28) eine Motorverzahnung aufweist, die in einem Abstand von weniger als 10 cm zu einer Verzahnung der Vordrehstation (18) angeordnet ist.

6. Rundtaktmaschine nach Anspruch 5,
**dadurch gekennzeichnet, dass**
die Motoreinheit (28) mit zumindest einer Vordrehstation (18) direktverzahnt ist.

7. Rundtaktmaschine nach einem der vorhergehenden Ansprüche,
**dadurch gekennzeichnet, dass**
die Motoreinheit (28) und die Vordrehstation (18) zumindest zu einem Großteil in einem gemeinsamen Gehäuse (36) angeordnet sind.

8. Rundtaktmaschine nach Anspruch 7,
**dadurch gekennzeichnet, dass**
das Gehäuse (36) mehrteilig ausgebildet ist.

9. Rundtaktmaschine nach einem der vorhergehenden Ansprüche,
**dadurch gekennzeichnet, dass**
die Motoreinheit (28) zumindest im Wesentlichen in einem von einer Längserstreckung (38) der Vordrehstation (18) aufgespannten Bereich (40) angeordnet ist.

10. Rundtaktmaschine nach Anspruch 9,
**dadurch gekennzeichnet, dass**
ein Abstand der Motoreinheit (28) von einem als Werkstückeingang (42) ausgebildeten Ende der Vordrehstation (18) zumindest größer als 10 % der Längserstreckung (38) der Vordrehstation (18) ist.

11. Rundtaktmaschine nach einem der vorhergehenden Ansprüche,
**dadurch gekennzeichnet, dass**
die Bearbeitungsvorrichtung (12) zumindest fünf Bearbeitungsstationen (44, 46, 48) aufweist.

12. Rundtaktmaschine nach einem der vorhergehenden Ansprüche,
**dadurch gekennzeichnet, dass**
der gemeinsame Kreisumfang (20) einen Radius von weniger als 220 mm aufweist.

13. Verfahren mit einer Rundtaktmaschine (10) nach einem der vorhergehenden Ansprüche,
**dadurch gekennzeichnet, dass**
bei zumindest einem Taktvorgang zumindest ein Werkstück (64) in Umfangsrichtung (32) um wenigstens zwei Kreissegmente (22, 24) verschoben wird.

## Claims

1. Rotary indexing machine comprising a machining device (12), which comprises at least two machining stations (14, 16) and at least one pre-turn station (18), which is configured to execute, before a separation of a workpiece from a semi-finished item and before a clamping of the workpiece in a workpiece holding unit, at least one turning operation on the workpiece, which are at least substantially arranged on a shared circumference (20) in respectively one circle segment (22, 24, 26), and with a motor unit (28), which is configured to drive the pre-turn station (18),
**characterised in that**
the motor unit (28) is at least largely arranged within the circle segment (26) of the pre-turn station (18), wherein the motor unit (28) is embodied as an external rotor motor.

2. Rotary indexing machine as claimed in claim 1,
**characterised in that**
the machining device (12) comprises at least one second pre-turn station (30).

3. Rotary indexing machine as claimed in claim 2,
**characterised in that**
the at least two pre-turn stations (18, 30) are arranged directly next to one another in a circumferential direction (32).

4. Rotary indexing machine as claimed in one of the preceding claims,
**characterised in that**
the pre-turn station (18) is supported movably along a longitudinal direction (34) of the pre-turn station (18).

5. Rotary indexing machine as claimed in one of the preceding claims,
**characterised in that**
the motor unit (28) has a motor toothing, which is arranged at a distance of less than 10 cm from a toothing of the pre-turn station (18).

6. Rotary indexing machine as claimed in claim 5,
**characterised in that**
the motor unit (28) is directly toothed with at least one pre-turn station (18).

7. Rotary indexing machine as claimed in one of the preceding claims,
**characterised in that**
the motor unit (28) and the pre-turn station (18) are arranged at least largely in a shared housing (36).

8. Rotary indexing machine as claimed in claim 7,
**characterised in that**
the housing (36) is of multipart configuration.

9. Rotary indexing machine as claimed in one of the preceding claims,
**characterised in that**
the motor unit (28) is arranged at least substantially in a region (40) spanned by a longitudinal extent (38) of the pre-turn station (18).

10. Rotary indexing machine as claimed in claim 9,
**characterised in that**
a distance of the motor unit (28) from an end of the pre-turn station (18), which is embodied as a workpiece inlet (42), is at least greater than 10% of the longitudinal extent (38) of the pre-turn station (18).

11. Rotary indexing machine as claimed in one of the preceding claims,
**characterised in that**
the machining device (12) comprises at least five machining stations (44, 46, 48).

12. Rotary indexing machine as claimed in one of the preceding claims,
**characterised in that**
the shared circumference (20) has a radius of less than 220 mm.

13. Method with a rotary indexing machine (10) as claimed in one of the preceding claims, **characterised in that** in at least one indexing process at least one workpiece (64) is displaced in a circumferential direction (32) by at least two circle segments (22, 24).

## Revendications

1. Machine cadencée circulaire avec un dispositif à usinage (12) comprenant au moins deux postes d'usinage (14, 16) et au moins un poste à dégrossage à tour (18), lequel est prévu à exécuter sur la pièce à travailler au moins un usinage tournant en avant d'une séparation d'une pièce à travailler d'un semi-produit et en avant d'un enserrage de la pièce à travailler dans une unitè de retention de pièce à travailler, lesquels sont disposés au moins sensiblement sur un périmètre circulaire commun (20), chacun dans un segment circulaire (22, 24, 26), et avec une unité motorique (28) prévue à entraîner le poste à dégrossage à tour (28),
**caractérisée en ce que**
l'unité motorique (28) est disposée au moins en grande partie à l'intérieur du segment circulaire (26) du poste à dégrossage à tour (18),
l'unité motorique (28) étant implémentée comme moteur à rotor extérieur.

2. Machine cadencée circulaire selon la revendication 1,
**caractérisée en ce que**
le dispositif à usinage (12) comporte au moins un deuxième poste à dégrossage à tour (30).

3. Machine cadencée circulaire selon la revendication 2,
**caractérisée en ce que**
les au moins deux postes à dégrossage (18, 30) sont disposés en direction circonférentielle (32), directement l'un à côté de l'autre en direction circonférentielle (32).

4. Machine cadencée circulaire selon l'une quelconque des revendications précédentes,
**caractérisée en ce que**
le poste à dégrossage à tour (18) est supporté de façon mobile le long d'une direction longitudinale (34) du poste à dégrossage à tour (18).

5. Machine cadencée circulaire selon l'une quelconque des revendications précédentes,
**caractérisée en ce que**
l'unité motorique (28) comporte une denture de moteur disposée dans une distance de moins que 10 cm d'une denture du poste à dégrossage à tour (18).

6. Machine cadencée circulaire selon la revendication 5,
**caractérisée en ce que**
l'unité motorique (28) est directement engrenée avec au moins un poste à dégrossage à tour (18).

7. Machine cadencée circulaire selon l'une quelconque des revendications précédentes,
**caractérisée en ce que**
l'unité motorique (28) et le poste à dégrossage à tour (18) sont disposés au moins en grande partie dans un boîtier commun (36).

8. Machine cadencée circulaire selon la revendication 7,
**caractérisée en ce que**
le boîtier (36) est réalisé de plusieurs composants.

9. Machine cadencée circulaire selon l'une quelconque des revendications précédentes,
**caractérisée en ce que**
l'unité motorique (28) est disposée au moins sensiblement dans une zone (40) étendue par une extension longitudinale (38) du poste à dégrossage à tour (18).

10. Machine cadencée circulaire selon la revendication 9,
**caractérisée en ce qu'**
une distance entre l'unité motorique (28) et une extrémité du poste à dégrossage à tour (18) implémentée comme entrée de pièce à travailler (42) est au moins plus grand que 10 % de l'extension longitudinale (38) du poste à dégrossage à tour (18).

11. Machine cadencée circulaire selon l'une quelconque des revendications précédentes,
**caractérisée en ce que**
le dispositif à usinage (12) comporte au moins cinq postes d'usinage (44, 46, 48).

12. Machine cadencée circulaire selon l'une quelconque des revendications précédentes,
**caractérisée en ce que**
le périmètre de cercle commun (20) a un radius de moins que 220 mm.

13. Procédé avec une machine cadencée circulaire (10) selon l'une quelconque des revendications précédentes,
**caractérisée en ce qu'**,
en au moins un processus cadencé, au moins une pièce à travailler (64) est déplacée en direction circonférentielle (32) par au moins deux segments de cercle (22, 24).
